# EUROPÄISCHE PATENTSCHRIFT

(11) **EP 2 489 888 B1**
(45) Veröffentlichungstag und Bekanntmachung des Hinweises auf die Patenterteilung: **18.05.2016**
(21) Anmeldenummer: 12168051.6
(22) Anmeldetag: 26.03.2007
(51) Int. Cl.: F16C 17/10, F16C 11/02

(54) **Spielfreie Gleitlageranordnung**
Accurately fitted plain bearing
Palier lisse sans jeu

(30) Priorität: 06.04.2006 DE 102006016612
(43) Veröffentlichungstag der Anmeldung: 22.08.2012
(62) Teilanmeldung aus: 07727333.2
(73) Patentinhaber: Saint-Gobain Performance Plastics Pampus GmbH, 47877 Willich (DE)
(72) Erfinder: Weiden, Janaki, 51467 Bergisch-Gladbach (DE); Jäger, Hans-Jürgen, 50354 Hürth (DE)
(74) Vertreter: Zimmermann & Partner Patentanwälte mbB

(56) Entgegenhaltungen:
- WO-A-00/52348
- DE-A1- 1 817 036
- DE-A1- 10 124 843
- DE-U1- 8 700 792
- US-A- 5 229 198

## Beschreibung

Die Erfindung betrifft ein Gleitlager mit einem Lagergehäuse und einer in das Lagergehäuse eingesetzten Lagerbüchse, wobei die Lagerbüchse axial geöffnet ist. Ferner betrifft die Erfindung eine spielfreie Gleitlageranordnung mit definiert eingestelltem Drehmoment.

Spielfreie Gleitlageranordnungen mit geschlitzter Gleitlagerbuchse sind aus dem Stand der Technik seit längerem bekannt und kommen in verschiedenen industriellen Anwendungen, beispielsweise in Scharnieren, zum Einsatz. Als nachteilig erweist sich hierbei regelmäßig, dass eine spielfreie Lagerung eines Bauteils in einem Gleitlager mit definiert eingestelltem Drehmoment, insbesondere mit sehr kleinem Drehmoment, nur mit höchstem technischen Aufwand, in vielen Fällen sogar überhaupt nicht, erreicht werden kann. DE 101 24 843 A1 betrifft eine Lageranordnung mit einem Gehäuse, das eine durchgehende von einer Wandfläche begrenzte Öffnung aufweist, einem innerhalb dieser Öffnung angeordneten kugeligen Innenteil und einem Gleitteil,das im Zwischenraum zwischen dem kugeligen Innenteil und der die Gehäuseöffnung begrenzenden Wandfläche angeordnet ist. Die Merkmale des Oberbegriffs des Anspruchs 1 sind aus dieser Schrift bekannt.

WO 00/52348 A betrifft ein selbstschmierendes Rollenlager mit einem zylindrischen Einsatz, der eine tragfähige Polymerschicht umfasst.

Die Pressung und damit verbunden das Drehmoment über die Lebensdauer des Gleitlagers hängen ab von den Fertigungstoleranzen der Einzelkomponenten, dem Verschleiß, dem das Gleitlager im Betrieb unterworfen ist, sowie den Temperaturschwankungen im Betrieb. Bei letzteren machen sich insbesondere die unterschiedlichen Wärmeausdehnungskoeffizienten der eingesetzten Materialien bemerkbar. Eine Kompensation der Einflüsse der genannten Faktoren ist jeweils nur für eine Betriebssituation mit gegebener Temperatur, Fertigungstoleranz und Verschleiß unter hohem technischen Aufwand möglich. Geänderte Betriebsbedingungen führen unweigerlich zu einer unkontrollierten Änderung der Pressung und damit zu einem verändertem Drehmoment.

Der Erfindung liegt daher die Aufgabe zugrunde, ein Gleitlager und eine spielfreie Gleitlageranordnung anzugeben, wobei das Gleitlager bzw. die Gleitlageranordnung auch unter wechselnden Betriebsbedingungen und über die gesamte Lebensdauer mit definiertem Drehmoment betrieben werden kann.

Die Aufgabe wird erfindungsgemäß mit einem Gleitlager nach dem Patentanspruch 1 gelöst.

Sowohl die Lagerbüchse als auch das Lagergehäuse sind axial geöffnet. Unter einer axialen Öffnung im Sinne der Erfindung ist jede beliebige Öffnung zu verstehen, die sich axial durch die Lagerbüchse bzw. das Lagergehäuse erstreckt und somit eine nicht mehr geschlossene Umfangsfläche des entsprechenden Bauteils bewirkt. Die axiale Öffnung ist sowohl im Falle der Lagerbüchse als auch des Lagergehäuses als axialer Schlitz ausgebildet, wobei der axiale Schlitz des Lagergehäuses und der axiale Schlitz der Lagerbuchse keinen gemeinsamen, durchgehenden Schlitz bilden.

Das erfindungsgemäße Gleitlager ist für den Einsatz in einem weiten Belastungsbereich geeignet. So ist ein dauerhafter Einsatz in einem weiten Bereich bei einer spezifischen Lagerbelastung p zwischen 0,1 und mehr als 100 MPa möglich und einer Lagergeschwindigkeit zwischen 0,001 und maximal ca. 2m/s möglich.

Das Drehmoment einer mit dem erfindungsgemäßen Gleitlager zu realisierenden Gleitlageranordnung kann praktisch beliebig über die Auswahl der Steifigkeit des Gehäuses eingestellt werden. Die Steifigkeit des Gleitlagergehäuses hängt dabei entscheidend von den Eigenschaften des Gehäusewerkstoffes, der Materialstärke und der jeweils gewählten Gehäusegeometrie ab. Für sehr kleine Drehmomente ist das Lagergehäuse vorzugsweise aus einem Kunststoff, insbesondere einem im Spritzgussverfahren verarbeitbaren Kunststoff mit geringer Wandstärke gefertigt. Vorteilhafterweise ist dabei dieser Kunststoff zur Herstellung des Gehäuses um die Lagerbüchse herumgespritzt. Ferner weist das Gehäuse im Falle sehr kleiner Drehmomente vorzugsweise eine geringe Wandstärke auf.

Falls hohe Drehmomente angestrebt werden, besteht das Gehäuse vorzugsweise aus einem besonders steifen, typischerweise aus einem metallischen Werkstoff. Dabei kann es sich um einen Gusswerkstoff, insbesondere Stahl oder eine Aluminiumlegierung, handeln. Besonders vorteilhaft ist der Einsatz einer Memory-Legierung (auch als Formgedächtnis-Legierung bezeichnet). Diese hat die Eigenschaft oberhalb einer materialspezifischen kritischen Temperatur ihre frühere "gespeicherte" Form wieder anzunehmen. Eine Legierung, die diese Eigenschaften in besonderem Maße zeigt, ist eine Nickel-Titan-Legierung.

Die axial geöffnete Lagerbuchse kann aus verschiedenen Materialien bestehen. Als Gleitmaterial enthält sie einen Kunststoff, vorzugsweise einen Hochtemperatur-Kunststoff, besonders vorzugsweise einen Fluorkunststoff, insbesondere Polyterrafluorethylen, Polyimid, Polyamidimid, Polyvinylidenfluorid, Perfluoralkoxy-Copolymer, Polyetheretherketon, Polyethylen, insbesondere ultrahochmolekulares Polyethylen, oder deren Kombinationen.

Nach einer weiteren vorteilhaften Ausgestaltung der Erfindung ist vorgesehen, dass die Lagerbüchse ein Verstärkungsmaterial enthält. Dieses kann aus Metall, insbesondere Kupfer, Edelstahl, Chrom, Nickel, Zink, einer Zink-Eisen-Legierung, Eisen, Bronze und/oder Aluminium oder einer Legierung davon bestehen. Vorzugsweise weist es eine offene Struktur auf und ist insbesondere als Gewebe, insbesondere als Drahtgewebe, Streckmetall, Vlies, insbesondere als Metallvlies und/oder als Lochblech ausgebildet.

Bei der Lagerbüchse des erfindungsgemäßen Gleitlagers ist vorgesehen, dass das Gleitmaterial der Lagerbüchse rückseitig mit einem Träger verbunden ist. Dieser verleiht der Lagerbüchse eine besondere Steifigkeit und verbessert zudem ihre Formungseigenschaften. Der Träger wiederum besteht zweckmäßigerweise aus Metall, vorzugsweise Stahl, Edelstahl, Kupfer, Titan, Bronze, Aluminium oder einer Legierung hiervon.

Die axial geöffnete Lagerbüchse kann auf verschiedene Weise hergestellt sein. Besonders vorteilhaft, weil einfach zu realisieren, ist die Ausführung als gerollte Lagerbüchse. Eine gerollte Lagerbüchse wird aus Endlosmaterial, z.B. laminierter und geschnittener PTFE- Folie, mit anschließendem Formungsschritt hergestellt.

Die Lagerbüchse weist mindestens einen Axialbund auf, der u.a. ein Herausrutschen der Lagerbüchse aus dem Lagergehäuse verhindert.

Die eingangs genannte Aufgabe wird ferner mit einer spielfreien Gleitlageranordnung nach Patentanspruch 1 dadurch gelöst, dass die Welle mit Übermaß in die Lagerbüchse derart eingesetzt ist, dass sich die Lagerbüchse und das Lagergehäuse aufweiten.

Bei der erfindungsgemäßen Gleitlageranordnung wird ausgenutzt, dass das axial geöffnete und durch die mit Übermaß in die Lagerbüchse eingesetzte Welle aufgeweitete Gehäuse eine konstante Klemmwirkung auf die Welle ausübt und somit für eine dauerhafte Spielfreiheit sorgt.

Ändern sich mit der Zeit die Abmaße der Einzelkomponenten des Gleitlagers bzw. der Gleitlageranordnung durch Temperaturschwankungen und/oder Verschleiß, so wird dies durch die konstante Klemmwirkung des axial geöffneten Gehäuses derart kompensiert, dass die definierte Pressung und damit verbunden das definierte Drehmoment des Gleitlagers erhalten bleibt. Die erfindungsgemäße Gleitlageranordnung kann zusätzlich axial durch einen zweiten Bund gesichert werden.

Die Klemmkraft und damit das Drehmoment der Gleitlageranordnung können durch die Steifigkeit des Gehäuses, insbesondere durch den verwendeten Werkstoff und die Gehäusewanddicke sehr präzise eingestellt werden. Ferner kann die gewünschte Steifigkeit auch durch eine entsprechende Gehäusegeomtrie mit Verstärkungsrippen usw. erreicht werden.

Die in der Gleitlageranordnung verwendete Welle weist vorzugsweise stirnseitig einen Radius oder eine Fase auf. Dies erleichtert das Einfügen der erfindungsgemäß mit Übermaß gefertigten Welle in das Gleitlager.

Ferner sollte die Welle eine für trocken laufende Gleitlager geeignet hohe Oberflächengüte aufweisen. Die Oberflächenrauhigkeit der Welle liegt hierbei sinnvollerweise zwischen 0,02 und 1 pm, vorzugsweise zwischen 0,05 und 0,8 pm, insbesondere zwischen 0,1 und 0,4 pm.

Die Einsatzmöglichkeiten des erfindungsgemäßen Gleitlagers und der erfindungsgemäßen Gleitlageranordnung sind sehr vielfältig. Besonders vorteilhaft ist die Verwendung in einem Automobil, wo es auf eine lange Lebensdauer bei definiertem und zeitlich konstantem Drehmoment bei wechselnden Betriebsbedingungen (Temperatur) ankommt. Hier ist insbesondere der Einsatz in einer verstellbaren Scheinwerferaufhängung ("Kurvenlicht") vorteilhaft, da sich hierbei eine mit der Zeit abnehmende Spielfreiheit und damit einhergehend aufkommende Vibrationen des Scheinwerfers besonders störend bemerkbar machen. Weitere vorteilhafte Einsatzmöglichkeiten ergeben sich in Notebook- Scharnieren, Tür-Scharnieren, Druckerköpfen oder WinkelSensoren.

Im folgenden wird die Erfindung anhand einer ein Ausführungsbeispiel darstellenden Zeichnung näher erläutert. Es zeigen:
- Fig. 1: eine erfindungsgemäße Gleitlageranordnung in der Ausführung als Loslager in seitlicher Schnittansicht,
- Fig. 2: die Gleitlageranordnung aus Fig. 1 in Frontansicht gemäß der Schnittlinie II-II,
- Fig. 3: eine erfindungsgemäße Gleitlageranordnung in der Ausführung als Festlager in seitlicher Schnittansicht und
- Fig. 4: das Material der Lagerbüchse der Gleitlageranordnung aus Fig. 1 im Querschnitt.

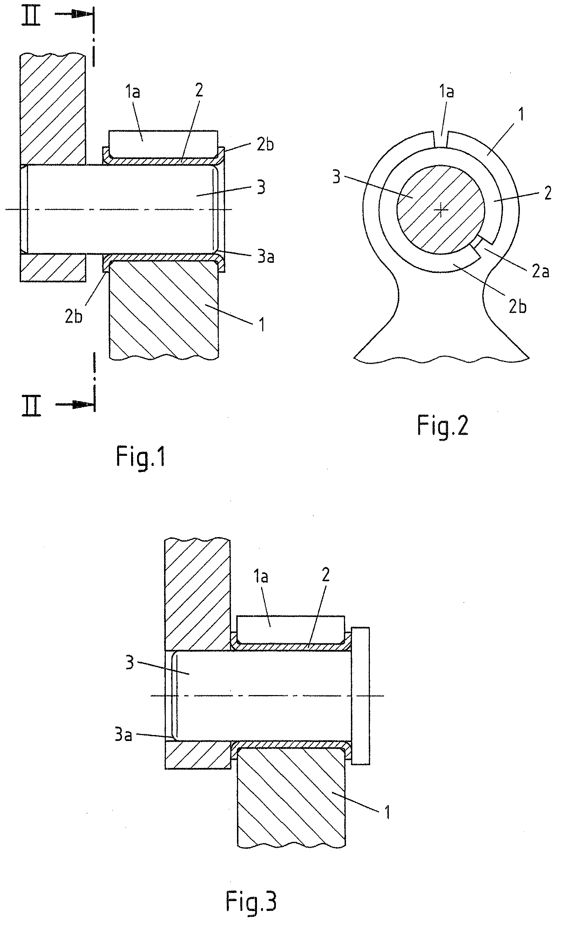

Die erfindungsgemäße spielfreie Gleitlageranordnung nach Fig. 1 umfasst Lagergehäuse 1 eine in das Lagergehäuse eingesetzte Lagerbüchse 2 sowie einer in die Lagerbüchse 2 eingesetzten Welle 3 als Lagerpartner der Lagerbüchse. Die Lagerbüchse 2 weist an ihren beiden Enden jeweils einen Axialbund 2b auf, durch welchen ein fester, gegen ein unbeabsichtigtes Herausrutschen gesicherter Sitz der Lagerbüchse 2 im Gehäuse 1 gegeben ist. Wie auch in Fig.

2 erkennbar, sind sowohl das Lagergehäuse 1 als auch die Lagerbüchse 2 axial geöffnet, wobei die axialen Öffnungen des Gehäuses 1 und der Buchse 2 jeweils als axialer Schlitz 1a, 2a ausgebildet sind.

Bei der erfindungsgemäßen Gleitlageranordnung ist die Welle 3 mit Übermaß in die Lagerbüchse 2 derart eingesetzt, dass sich die Lagerbüchse 2 und das Lagergehäuse 1 aufweiten. Die Welle 3 weist zumindest an ihrem einen Ende einen Radius 3a auf, welcher das Einfügen der relativ zu Lagerbüchse 2 und Lagergehäuse 1 mit Übermaß ausgebildeten Welle 3 erleichtert.

Durch die Klemm- und Federwirkung des aufgeweiteten Gehäuses 1 ist sichergestellt, dass die spielfreie Gleitlageranordnung über die gesamte Lebensdauer des Gleitlagers auch bei wechselnden Betriebsbedingungen ein konstantes Drehmoment aufweist. Das Drehmoment wird dabei durch die Werkstoffeigenschaften des Lagergehäuses 1, die verwendete Materialstärke und die Gehäusegeometrie beeinflusst.

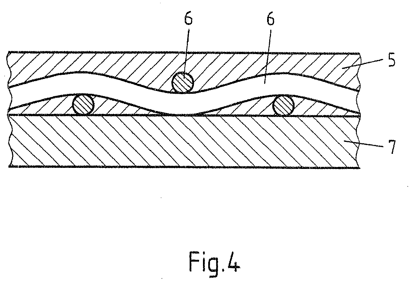

In Fig. 4 ist das Material der Lagerbüchse 2 der Gleitlageranordnung aus Fig. 1 im Querschnitt dargestellt. Es umfasst an seiner dem Lagerpartner der Lagerbüchse 2 zugewandten Seite eine Schicht 5 aus Gleitmaterial, vorliegend einem PTFE-Compound-Material. Innerhalb der Schicht 5 ist ein Verstärkungsmaterial vorgesehen, das vorliegend als Drahtgewebe 6 ausgebildet ist und aus Kupfer, Edelstahl, Chrom, Nickel, Zink, einer Zink-Eisen-Legierung, Eisen, Bronze und/oder Aluminium oder einer Legierung davon bestehen kann. Rückseitig ist die Gleitmaterialschicht 5 mit einem massiv ausgebildeten Träger 7 verbunden. Dieser besteht vorliegend aus Metall, vorzugsweise Stahl, Edelstahl, Kupfer, Titan, Bronze, Aluminium oder einer Legierung hiervon.

Die in den Fig. 1 bis 3 gezeigte Gleitlageranordnung kommt beispielsweise bei einer verstellbaren Scheinwerferanordnung in einem Automobil zur Anwendung, wobei das Lagergehäuse Teil eines fest mit der Karosserie verbundenen Rahmens ist und die Welle ihrerseits mit der Aufnahme einer horizontal und/oder vertikal verstellbaren Scheinwerfereinheit verbunden ist. Ändern sich mit der Zeit die Abmaße der Einzelkomponenten des Gleitlagers bzw. der Gleitlageranordnung durch Temperaturschwankungen und/oder Verschleiß, so wird dies durch die konstante Klemmwirkung des axial geöffneten Gehäuses derart kompensiert, dass die definierte Pressung und damit verbunden das definierte Drehmoment des Gleitlagers erhalten bleibt.

Die erfindungsgemäße Gleitlageranordnung ermöglicht eine spielfreie Lagerung mit definiert eingestelltem Drehmoment auch unter Verwendung axial geöffneter Lagerbüchsen. Folglich ist es nunmehr möglich, Gleitlager wie Nadel- oder Kugellager auch spielfrei auszuführen.

## Patentansprüche

1. Spielfreie Gleitlageranordnung mit definiert eingestelltem Drehmoment mit einem Gleitlager, wobei das Gleitlager ein Lagergehäuse (1) und eine in das Lagergehäuse (1) eingesetzte Lagerbuchse (2) aufweist und wobei die Lagerbuchse (2) und das Lagergehäuse (1) axial geöffnet sind, und mit einer Welle (3) als Lagerpartner der Lagerbuchse (2), wobei die Welle (3) mit Übermaß in die Lagerbuchse (2) derart eingesetzt ist, dass sich die Lagerbuchse (2) und das Lagergehäuse (1) aufweiten,
wobei die Lagerbuchse (2) ein Gleitmaterial (5) enthält, das rückseitig mit einem Träger (7) verbunden ist, und
wobei die Lagerbuchse (2) mindestens einen Axialbund (2b) aufweist,
wobei die axiale Öffnung des Lagergehäuses (1) als axialer Schlitz (1a) und die axiale Öffnung der Lagerbuchse (2) als eigenständiger axialer Schlitz (2a) ausgebildet ist, wobei sich der axiale Schlitz (1a) nur durch das Lagergehäuse (1) erstreckt und sich der axiale Schlitz (2a) nur durch die Lagerbuchse (2) erstreckt,
**dadurch gekennzeichnet, dass**
die Lagerbuchse als Gleitmaterial einen Kunststoff enthält, und dass der axiale Schlitz (1a) des Lagergehäuses (1) und der axiale Schlitz (2a) der Lagerbuchse (2) keinen gemeinsamen, durchgehenden Schlitz bilden.

2. Gleitlageranordnung nach Anspruch 1, wobei das Gehäuse (1) aus Kunststoff besteht, insbesondere einem im Spritzgussverfahren verarbeiteten Kunststoff, der vorzugsweise um die Lagerbuchse (2) herumgespritzt ist.

3. Gleitlageranordnung nach einem der Ansprüche 1 oder 2, wobei das Gehäuse (1) aus einem metallischen Werkstoff besteht, der insbesondere ein Gusswerkstoff und/oder eine Memory-Legierung ist.

4. Gleitlageranordnung nach Anspruch 1, wobei das Gleitmaterial (5) rückseitig mit einem Träger (7) aus Metall, verbunden ist.

5. Gleitlageranordnung nach Anspruch 1 oder 4, wobei die Lagerbuchse (2) ein Verstärkungsmaterial (6) enthält.

6. Gleitlageranordnung nach Anspruch 5, wobei das Verstärkungsmaterial (6) ein Metall ist.

7. Gleitlageranordnung nach Anspruch 5 oder 6, wobei das Verstärkungsmaterial (6) eine offene Struktur aufweist und insbesondere als Gewebe ausgebildet ist.

8. Gleitlageranordnung nach einem der Ansprüche 1 bis 7, wobei die Lagerbuchse (2) eine gerollte Lagerbuchse ist.

9. Gleitlageranordnung nach einem der Ansprüche 1 bis 8, wobei das Drehmoment durch die Steifigkeit des Gehäuses (1), insbesondere durch die Wahl des das Gehäuse (1) bildenden Materials und die Gehäusewanddicke, eingestellt ist.

10. Gleitlageranordnung nach einem der Ansprüche 1 bis 9, wobei die Welle (3) stirnseitig einen Radius (3a) oder eine Fase aufweist.

11. Gleitlageranordnung nach einem Ansprüche 1 bis 10, wobei die Rauhigkeit Ra der Oberfläche der Welle (3) zwischen 0,02 und 1 µm liegt.

12. Gleitlageranordnung nach einem der Ansprüche 1 bis 11, wobei die Welle (3) die eines Winkelsensors oder die eines Türscharniers oder die eines Druckerkopfes oder die eines Notebook-Scharniers oder die einer verstellbaren Scheinwerferaufhängung ist.

## Claims

1. A play-free plain bearing arrangement with a rotational torque which is set in a defined manner, said arrangement having a plain bearing, wherein the plain bearing has a bearing housing (1) and a bearing sleeve (2) inserted into the bearing housing (1), and wherein the bearing sleeve (2) and the bearing housing (1) are open axially, and having a shaft (3) as as bearing partner of the bearing sleeve (2), wherein the shaft (3) is inserted with an oversize into the bearing sleeve (2) in such a way that the bearing sleeve (2) and the bearing housing (1) expand,
wherein the bearing sleeve (2) contains a sliding material (5)
which is connected at the rear to a support (7), and wherein the bearing sleeve (2) has at least one axial collar (2b),
wherein the axial opening of the bearing housing (1) is formed as an axial slot (1 a) and the axial opening of the bearing sleeve (2) is formed as an independent axial slot (2a), wherein the axial slot (1a) only extends through the bearing housing (1) and the axial slot (2a) only extends through the bearing sleeve (2),
**characterised in that**
the bearing sleeve contains a plastic as sliding material, and that
the axial slot (1a) of the bearing housing (1) and the axial slot (2a) of the bearing sleeve (2) do not form a common continuous slot.

2. Plain bearing arrangement according to claim 1, wherein the housing (1) consists of a plastic, in particular a plastic which can be processed in an injection molding process and is preferably molded around the bearing sleeve (2) by injection molding.

3. Plain bearing arrangement according to one of claims 1 or 2, wherein the housing (1) consists of a metallic material, which is in particular a cast material and/or a shape memory alloy.

4. Plain bearing arrangement according to claim 1, wherein the sliding material (5) is bonded on the rear side of a support (7) which consists of metal.

5. Plain bearing arrangement according to claim 1 or 4, wherein the bearing sleeve (2) contains a reinforcing material (6).

6. Plain bearing arrangement according to claim 5, wherein the reinforcing material (6) consists of metal.

7. Plain bearing arrangement according to claim 5 or 6, wherein the reinforcing material (6) has an open structure and is formed, in particular, as woven fabric.

8. Plain bearing arrangement according to one of claims 1 to 7, wherein the bearing sleeve (2) is a rolled bearing sleeve.

9. Plain bearing arrangement according to one of claims 1 to 8, wherein the rotational torque is set by the rigidity of the housing (1), in particular by the choice of the material forming the housing (1) and the housing wall thickness.

10. Plain bearing arrangement according to one of claims 1 to 9, wherein the shaft (3) has a radius (3a) or a chamfer on the face side.

11. Plain bearing arrangement according to one of claims 1 to 10, wherein the roughness Ra of the surface of the shaft (3) is between 0.02 and 1 µm.

12. Plain bearing arrangement according to one of claims 1 to 11, wherein the shaft (3) is that of an angle sensor or that of a door hinge or that of a printer head or that of a notebook hinge or that of an adjustable headlamp suspension.

## Revendications

1. Ensemble de palier coulissant sans jeu avec un couple de rotation réglé de façon définie, avec un palier coulissant, le palier coulissant présentant un logement de palier (1) et une douille de palier (2) insérée dans le logement de palier (1), et la douille de palier (2) et le logement de palier (1) étant ouverts axialement, et avec un arbre (3) en tant que partenaire de montage de la douille de palier (2), l'arbre (3) étant inséré dans la douille de palier (2) avec un surdimensionnement, si bien que la douille de palier (2) et le logement de palier (1) s'élargissent,
dans lequel la douille de palier (2) contient un matériau de coulissement (5), lequel est relié à un support (7) sur le côté carrière, et
dans lequel la douille de palier (2) présente au moins un collier axial (2b),
dans lequel l'ouverture axiale du logement de palier (1) est conçue comme une fente axiale (1a) et l'ouverture axiale de la douille de palier (2) est conçue comme une fente axiale indépendante (2a), la fente axiale (1a) s'étendant seulement à travers le logement de palier (1) et la fente axiale (2a) s'étendant seulement à travers la douille de palier (2),
**caractérisé en ce que**
la douille de palier contient une matière plastique en tant que matériau de coulissement, et **en ce que**
la fente axiale (1a) du logement de palier (1) et la fente axiale (2a) de la douille de palier (2) ne forment pas une fente continue commune.

2. Ensemble de palier coulissant selon la revendication 1, dans lequel le logement (1) est constitué de plastique, en particulier d'un plastique traité à l'aide d'un procédé de moulage par injection, lequel est de préférence pulvérisé autour de la douille de palier (2).

3. Ensemble de palier coulissant selon l'une des revendications 1 ou 2, dans lequel le logement (1) est constitué d'un matériau métallique, lequel est en particulier un matériau de fonderie et/ou un alliage à mémoire.

4. Ensemble de palier coulissant selon la revendication 1, dans lequel le matériau de coulissement (5) est relié à un support (7) en métal sur le côté carrière.

5. Ensemble de palier coulissant selon la revendication 1 ou 4, dans lequel le logement de palier (1) contient un matériau de renforcement (6).

6. Ensemble de palier coulissant selon la revendication 5, dans lequel le matériau de renforcement (6) est un métal.

7. Ensemble de palier coulissant selon la revendication 5 ou 6, dans lequel le matériau de renforcement (6) présente une structure ouverte, et est en particulier conçu comme un tissu.

8. Ensemble de palier coulissant selon l'une des revendications 1 à 7, dans lequel la douille de palier (2) est une douille de palier roulée.

9. Ensemble de palier coulissant selon l'une des revendications 1 à 8, dans lequel le couple de rotation est réglé par la rigidité du logement (1), en particulier par le choix du matériau formant le logement (1) et l'épaisseur de paroi de logement.

10. Ensemble de palier coulissant selon l'une des revendications 1 à 9, dans lequel l'arbre (3) présente un rayon (3a) ou un chanfrein sur le côté frontal.

11. Ensemble de palier coulissant selon l'une des revendications 1 à 10, dans lequel la rugosité Ra de la surface de l'arbre (3) varie entre 0,02 et 1 µm.

12. Ensemble de palier coulissant selon l'une des revendications 1 à 11, dans lequel l'arbre (3) est celui d'un capteur angulaire ou celui d'une charnière de porte ou celui d'une tête d'imprimante ou celui d'une charnière de Notebook ou celui d'une suspension de projecteur réglable.
